# EUROPEAN PATENT APPLICATION

(11) **EP 4 431 414 A1**
(43) Date of publication of application: **18.09.2024**
(21) Application number: 23206384.2
(22) Date of filing: 27.10.2023
(51) Int. Cl.: B65D 51/24, A47J 41/02

(54) **CAP UNIT WITH HANDLE AND CAPPED CONTAINER**

(30) Priority: 16.03.2023 JP 2023041847
(71) Applicant: Thermos L.L.C., Schaumburg, IL 60173 (US); Thermos K.K., Tsubame-shi, Niigata-ken (JP)
(72) Inventor: MARUYAMA, Takahiro, Niigata (JP); MURATA, Takeshi, Niigata (JP)
(74) Representative: Barker Brettell LLP

(57) **Abstract**

To provide a cap unit that prevents damage to the handle or hinge part when an impact or the like is applied to a handle or hinge part, a cap unit 1A is detachably attached to a container body 2 with an opening in the upper part thereof, provided with a cap body 7 for closing an upper opening of the container body 2 and a handle member 9 having both ends rotatably attached via a pair of hinge parts 8 to the cap body 7, wherein the handle member 9 has an arch part 9a that curves between both ends and has a shape that decreases in thickness toward a middle part of the arch part 9a, and is rotated between a first position positioned above the cap body 7 and a second position positioned on the side of the cap body 7.

## Description

### TECHINICAL FIELD

The present invention relates to a cap unit with a handle and a capped container.

### CONVENTIONAL TECHNOLOGY

Conventionally, there have been capped containers with a cap unit (lid body) that can be attached to the mouth and neck of the container body with an open top. Such a cap unit has a cap body that closes the upper opening of the container body, and the cap body is mounted by screwing against the container body.

In addition, in capped container with such a cap unit, for example, a grip such as a handle is rotatably attached to the cap body via a hinge part in order to facilitate portability (see, for example, Patent Documents 1 and 2).

### PRIOR ART DOCUMENTS

### Patent Document

Patent Document 1: Utility Model Application Laid-Open Publication S60-143535 Patent Document 2: Utility Model Registration No. 3234929

### SUMMARY OF THE INVENTION

### PROBLEM TO BE SOLVED BY THE INVENTION

Incidentally, in the cap unit described in the above Patent Documents 1 and 2, both ends of the handle are rotatably mounted via a pair of hinge parts with respect to the cap body.
The handle has an arch shape curve between the pair of hinges.

With the cap unit equipped with such a handle, the handle and the hinge part may be damaged by a load applied to the handle and the hinge part when an impact is applied to the handle, for example, if the unit is dropped with the handle facing downward.

Specifically, the handle may break, or the handle may bend in such a way that it collapses and spreads, causing the rivet-like parts securing the handle to the hinge (push 19 in the above Patent Document 1, rivet 80 in the above Patent Document 2) to come off and the handle to separate from the hinge.
Therefore, a mechanism is required to prevent the handle and hinge from being damaged by impact.

The present invention is proposed in view of these conventional circumstances, and has the objective of providing a cap unit which prevents the handle or hinge part from being damaged when a shock or the like is applied to the handle or hinge part, and by being equipped with such a cap unit, to provide a capped container that enables further improvement in usability.

### MEANS FOR SOLVING THE PROBLEM

In order to achieve the above objectives, the present invention provides the following means.
[1] A cap unit detachably attached to a container body with an opening on an upper part thereof, including:
   a cap body for sealing an upper opening of the container body; and a handle member having both ends rotatably attached via a pair of hinge parts to the cap body, wherein
   the handle member has an arch part that curves between the two ends and has a shape that decreases in thickness from the two ends toward the middle of the arch part, and is rotated between a first position positioned above the cap body and a second position positioned on the side of the cap body.
[2] The cap unit according to [1], wherein
   the hinge part has a hinge shaft provided on one of either the cap body or handle member and a hinge bearing provided on the other of either the cap body or handle member, and the hinge part is provided with a detachment prevention mechanism to suppress the elastic deformation of the handle member when the hinge shaft and hinge bearing abut due to both ends of the handle member elastically deforming in a direction pushing outward of the axial direction of the hinge shaft with respect to the cap body.
[3] The cap unit according to [2], wherein the hinge part has a hinge shaft provided on the cap body and a hinge bearing provided on the handle member.
[4] The cap unit according to [1], wherein
   the hinge part has a hinge shaft provided on the cap body, a hinge bearing provided on the handle member, and a cap member attached to the tip end side of the hinge shaft penetrating the hinge bearing, and
   the hinge shaft is axially supported by the hinge bearing.
[5] The cap unit according to [1], wherein
   the hinge part has a hinge shaft provided on one of either the cap body or handle member and a hinge bearing provided on the other of either the cap body or handle member; the hinge shaft is axially supported by the hinge bearing; and a clicking mechanism is provided on the hinge part to impart a clicking sensation at least at the first position and to retain the handle member in the first position, and the clicking mechanism has an engagement recess provided on one side of a mutually opposed surface between the hinge bearing and hinge shaft and an engagement protrusion provided on the other side thereof, and, the engagement recess is engaged with the engagement protrusion at least in the first position to impart a clicking sensation and retain the handle member in the first position.
[6] The cap unit according to [5], wherein
   when the handle member is rotated from the state where the engagement recess is engaged with the engagement protrusion at the first position in the clicking mechanism toward a first side or a second side of the rotation direction sandwiching the first position, the hinge bearing is moved relative to the hinge shaft in a direction in which both ends of the handle member are pushed outwardly in the axial direction of the hinge shaft with respect to the cap body, releasing the engaged state between the engagement recess and engagement protrusion.
[7] The cap unit according to [1], wherein
   the hinge part has a hinge shaft provided on one of either the cap body or handle member and a hinge bearing provided on the other of either the cap body or handle member the hinge shaft is axially supported by the hinge bearing
   and a handle retaining mechanism is provided on the hinge part to retain the handle member in at least the first position, where
   the handle retaining mechanism has a sliding member positioned between the hinge shaft and a mutually opposed surface of the hinge bearing to impart sliding resistance at least at the first position.
[8] The cap unit according to [7], wherein the handle retaining mechanism retains the handle member in the second position due to the sliding resistance by the sliding member at the second position.
[9] The cap unit according to [7], wherein the handle retaining mechanism retains the handle member variably between the first position and second position due to the sliding resistance by the sliding member from the first position to the second position.
[10] A capped container, including: the cap unit according to any one of [1] to [9], and a container body to which the cap unit is attached.

### EFFECT OF THE INVENTION

As described above, the present invention provides a cap unit that prevents the handle or hinge part from being damaged when a shock or the like is applied to the handle or hinge part, and a capped container that enables further improvement in usability by being equipped with such a cap unit.

### BRIEF DESCRIPTION OF THE DRAWINGS

FIG. 1 is a perspective view depicting the exterior appearance of a capped container provided with a cap unit according to Embodiment 1 of the present invention.
FIG. 2 is a cross-sectional view depicting the configuration of the capped container provided with the cap unit in FIG. 1.
FIG. 3 depicts the cap unit in FIG. 1, where (A) is a perspective view depicting the handle member positioned above the cap body and (B) is a perspective view depicting the handle member positioned on the side of the cap body.
FIG. 4 is a perspective view depicting the configuration of the hinge shaft provided on the side of the cap body at the hinge part provided on the cap unit in FIG. 1.
FIG. 5 depicts the configuration of the hinge bearing provided on the handle member side of the hinge part provided on the cap unit in FIG. 1, where (A) is a perspective view and (B) is a side view.
FIG. 6 is a perspective view depicting the hinge shaft being axially supported by the hinge bearing at the hinge part provided on the cap unit in FIG. 1.
FIG. 7 depicts the configuration of the cap member attached on the tip end side of the hinge shaft at the hinge part provided on the cap unit in FIG. 1, where (A) is a perspective view from the front side thereof, and (B) is a perspective from the back side thereof.
FIG. 8 depicts the configuration of the hinge part provided on the cap unit in FIG. 1, where (A) is a vertical cross-sectional view, and (B) is a horizontal cross-sectional view.
FIG. 9 depicts the hinge part provided on the cap unit in FIG. 1, where (A) is a cross-sectional view depicting the handle member positioned above the cap body and (B) is a cross-sectional view depicting the handle member positioned on the side of the cap body.
FIG. 10 is a perspective view depicting the configuration of the hinge shaft and sliding member provided on the cap body side at the hinge part provided on the cap unit according to Embodiment 2 of the present invention.
FIG. 11 depicts the configuration of the hinge part provided on the cap unit in FIG. 10, where (A) is a vertical cross-sectional view, and (B) is a horizontal cross-sectional view.
FIG. 12 is a perspective view depicting the configuration of the hinge shaft and sliding member provided on the cap body side at the hinge part provided on the cap unit according to Embodiment 3 of the present invention.
FIG. 13 is a horizontal cross-sectional view depicting the configuration of the hinge part provided on the cap unit in FIG. 12.
FIG. 14 depicts the hinge part provided on the cap unit in FIG. 12, where (A) is a cross-sectional view depicting the handle member positioned above the cap body and (B) is a cross-sectional view depicting the handle member positioned on the side of the cap body.

### DESCRIPTION OF THE PREFERRED EMBODIMENTS

The following is a detailed description of the embodiment of the present invention with reference to the drawings.

### (Embodiment 1)

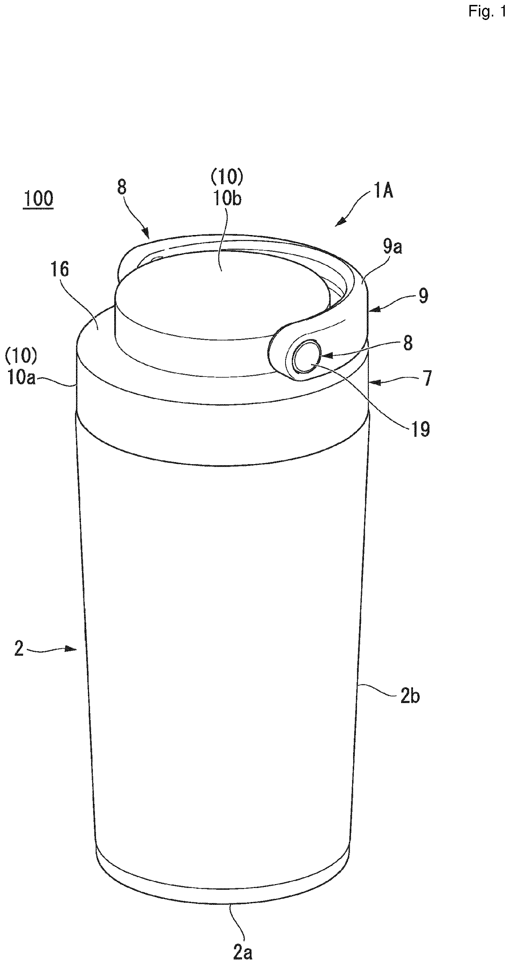

First, as Embodiment 1 of the present invention, a capped container 100 provided with a cap unit 1A as depicted in FIG. 1 to FIG. 9 will be described.

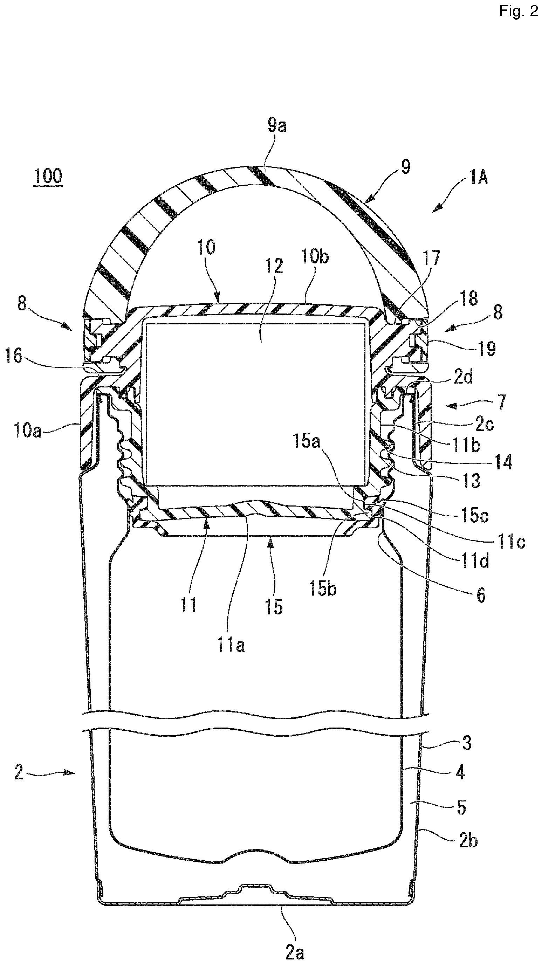

Note that FIG. 1 is a perspective view depicting the external appearance of the capped container 100 provided with the cap unit 1A
FIG. 2 is a cross-sectional view depicting the configuration of the capped container 100 provided with the cap unit 1A.

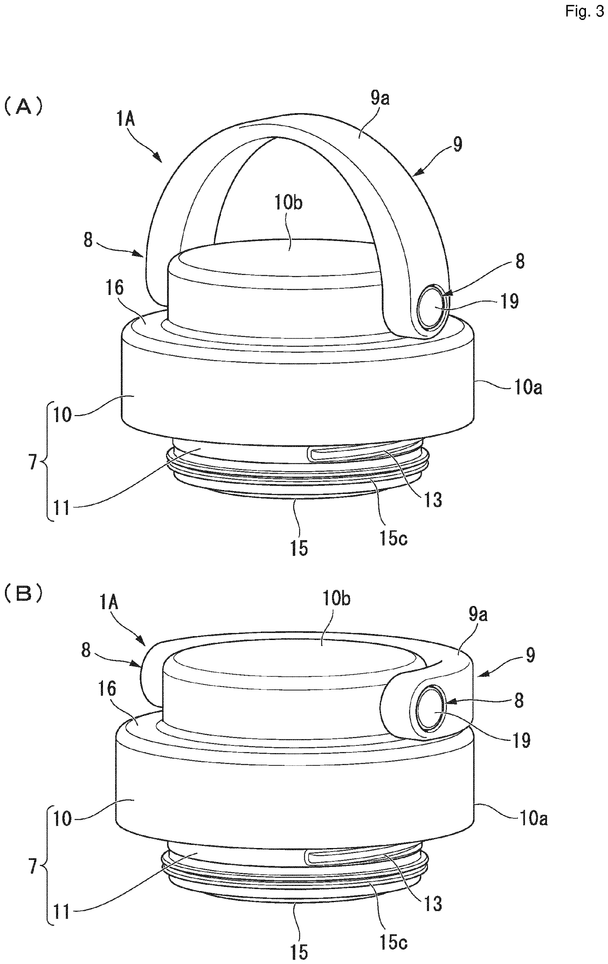

FIG. 3(A) is a perspective view of the cap unit 1A depicting a state in which the handle member 9 is positioned above the cap body 7.
FIG. 3(B) is a perspective view of the cap unit 1A depicting a state in which the handle member 9 is positioned on the cap body 7 side.

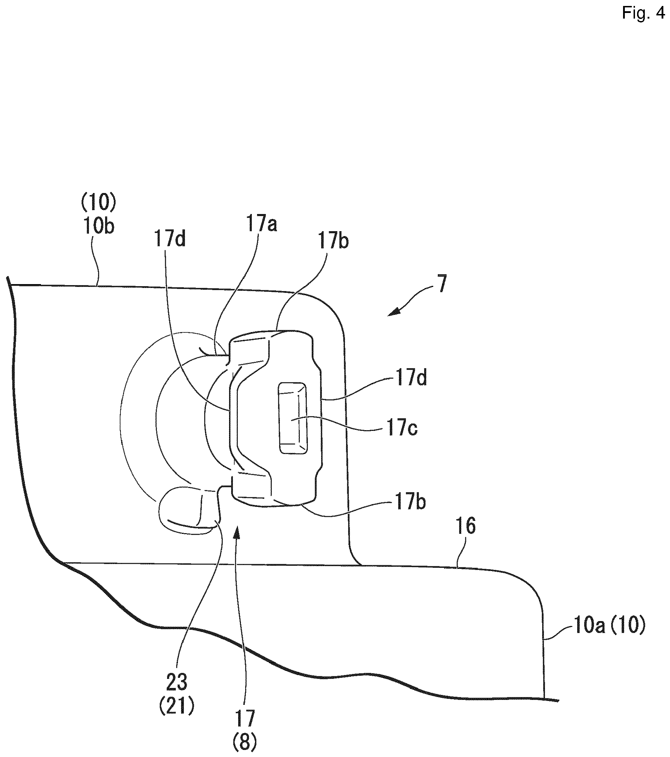

FIG. 4 is a perspective view of the hinge part 8 provided on the cap unit 1A depicting the configuration of a hinge shaft 17 provided on the cap body 7 side.

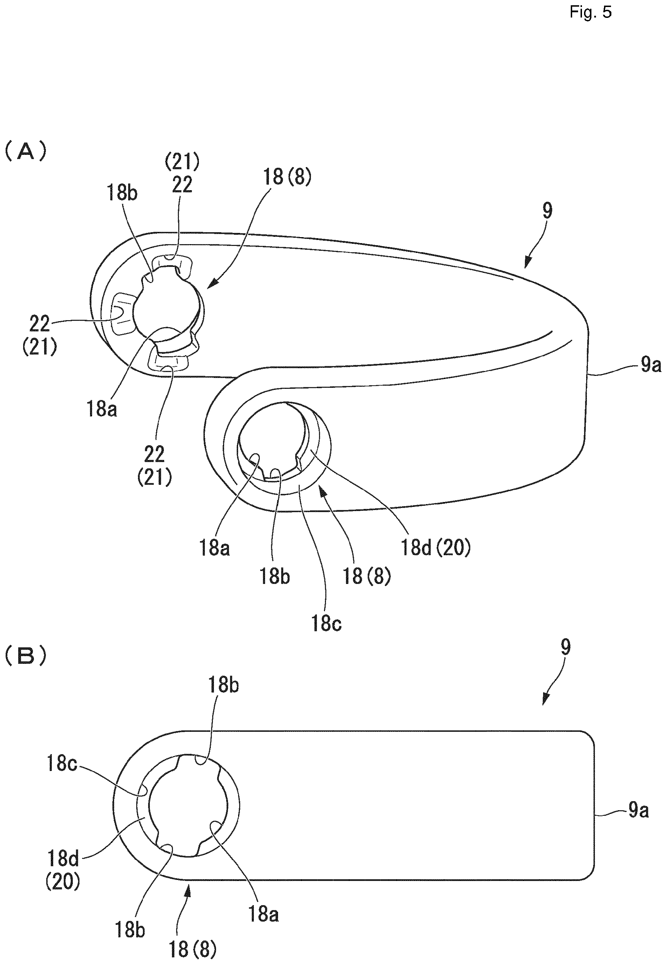

FIG. 5 depicts the configuration of the hinge bearing 18 provided on the handle member 9 side of the hinge part 8 provided on the cap unit 1A, where (A) is a perspective view and (B) is a side view.

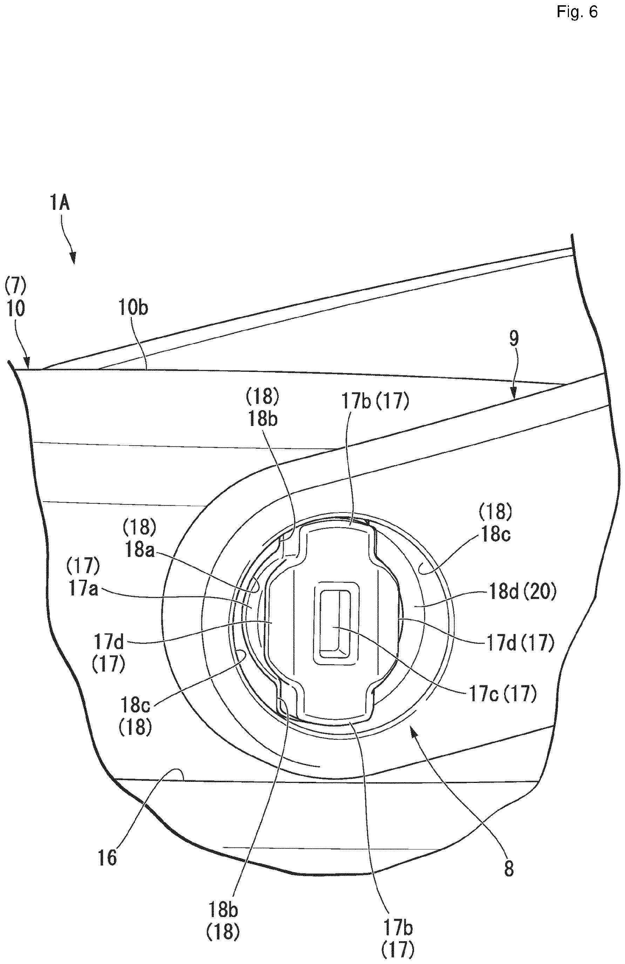

FIG. 6 is a perspective view of the hinge part 8 provided on the cap unit 1A, depicting a state in which the hinge shaft 17 is axially supported by the hinge bearing 18.

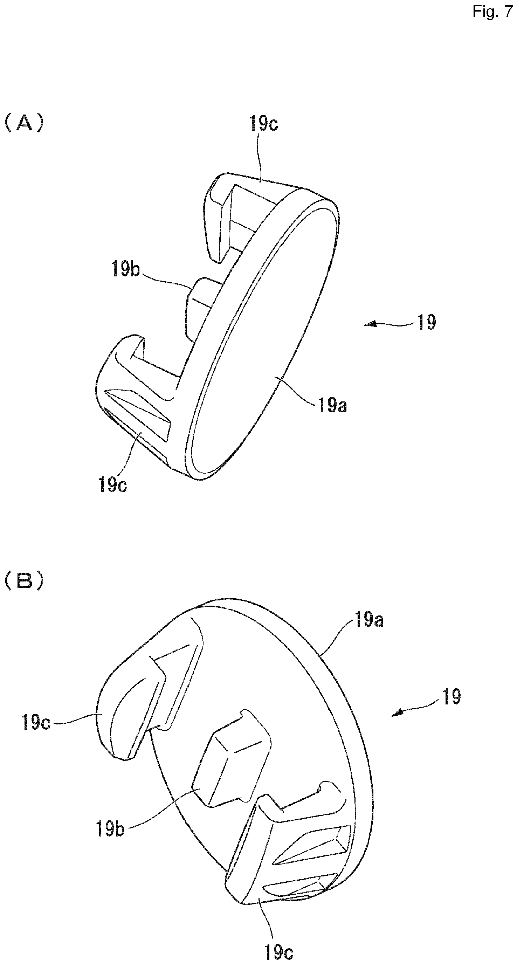

FIG. 7 depicts the configuration of a cap member 19 attached on the tip end side of the hinge shaft 17 at the hinge part 8 provided on the cap unit 1A, where (A) is a perspective view from the front side thereof, and (B) is a perspective from the back side thereof.

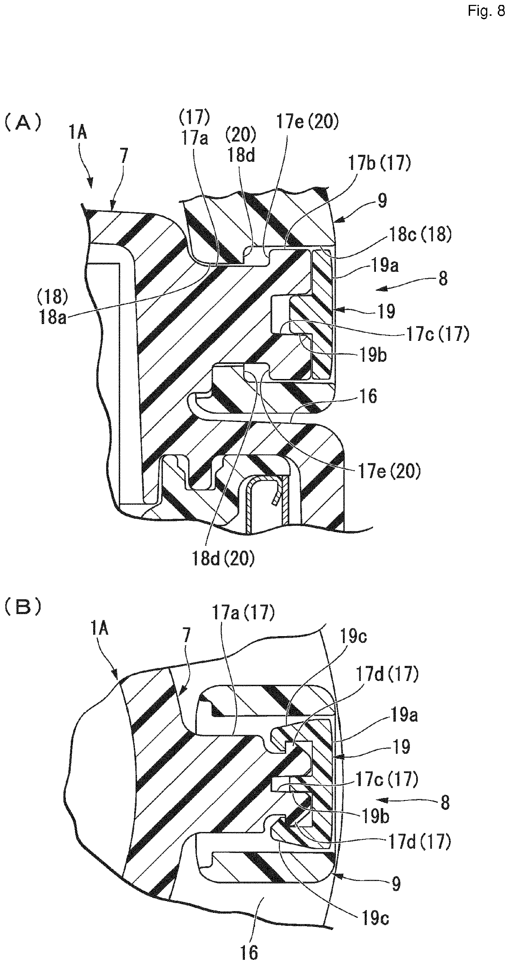

FIG. 8 depicts a configuration of the hinge part 8 provided on the cap unit 1A, where (A) is a vertical cross-sectional view and (B) is a horizontal cross-sectional view.

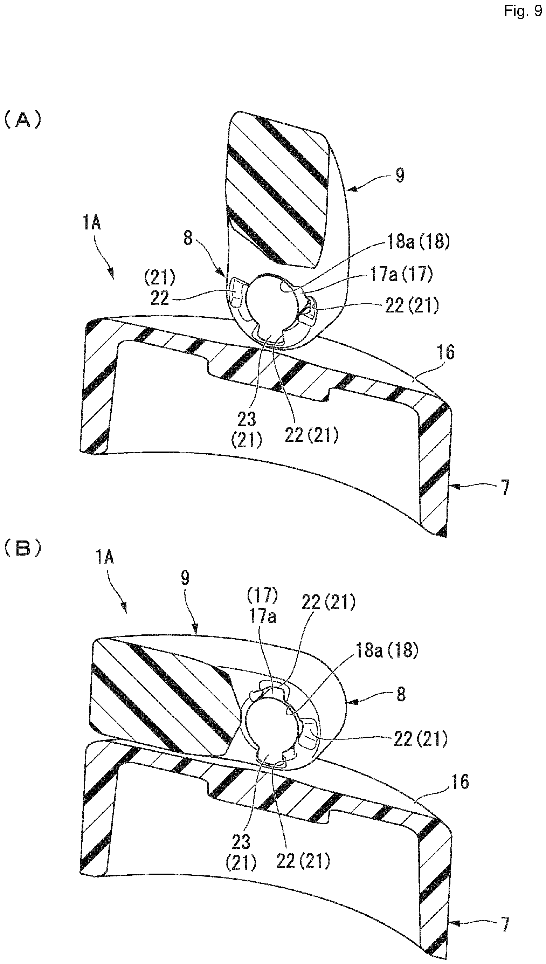

FIG. 9(A) is a cross-sectional view of the hinge part 8 provided on the cap unit 1A, depicting a state in which the handle member 9 is positioned above the cap body 7.
FIG. 9(B) is a cross-sectional view of the hinge part 8 provided on the cap unit 1A, depicting a state in which the handle member 9 is positioned on the side of the cap body 7.

As depicted in FIG. 1 and FIG. 2, the capped container 100 of the present embodiment has a cap unit 1A of the present embodiment and a container body 2 to which the cap unit 1A is detachably attached.

The capped container 100 is a beverage container that can keep beverages (contents) contained in the container body 2 cool or warm by means of the container body 2 having a vacuum insulation structure.

Specifically, the container body 2 is configured as a double structure container having a cylindrical outer container with an outer container 3 and inner container 4 made of, for example, stainless steel that are mutually joined at the mouth part in a state where the inner container 4 is stored inside the outer container 3. A vacuum insulating layer 5 is provided between the outer container 3 and the inner container 4. The vacuum insulating layer 5 can be formed, for example, by plugging the degassing hole on the bottom of the outer container 3 in a chamber that has been depressurized (evacuated) to a high vacuum.

The container body 2 has a substantially circular bottom 2a, a substantially cylindrical body 2b rising from the outer circumference of the bottom 2a, and a substantially cylindrical mouth neck part 2c that is reduced in diameter at the upper side of the body 2b. The upper end of the mouth neck part 2c has a circular opening as the upper opening 2d of the container body 2.

The container body 2 has a shape in which the outer circumference of the mouth neck part 2c is smaller in diameter than the outer circumference of the body part 2b, and the inner circumference of the mouth neck part 2c is smaller in diameter than the inner circumference of the body part 2b. Furthermore, a ring-shaped lip 6 protrudes along the entire circumference around the inner surface of the mouth neck part 2c.

Although the capped container 100 of the present embodiment has a substantially cylindrical external shape as a whole, the external shape of the capped container 100 is not limited to any particular shape, and can be modified according to size and design. The outer surface of the container body 2 may be painted or printed.

The cap unit 1A of the present embodiment is a lid that opens and closes the upper opening 2d of the container body 2 by being detachably attached to the mouth neck part 2c of the container body 2 by screwing.

Specifically, as depicted in FIG. 1 and FIG. 2, the cap unit 1A has a cap body 7 that closes the upper opening 2d of the container body 2, and a handle member 9, both ends of which are rotatably attached to the cap body 7 via a pair of hinge parts 8.

In other words, the capped container 100 with the cap unit 1A can be carried while holding the handle member 9.

The cap body 7 has an outer lid 10 that covers the upper opening 2d of the container body 2 and an inner plug 11 that is fitted inside the container body 2 from the upper opening 2d.

The outer lid 10 is made of heat-resistant resin, for example, and has a peripheral wall 10a formed in a substantially cylindrical shape so the appearance thereof is continuous with the body 2b of the container body 2, and an upper wall 10b that closes the upper part of the peripheral wall 10a.

The inner plug 11 is made of heat-resistant resin, for example, and has a substantially circular bottom wall 11a and a peripheral wall 11b that rises in a substantially cylindrical shape from the outer circumference of the bottom wall 11a.

The inner plug 11 is located at the center of the inner side of the outer lid 10, and the peripheral wall 11b is integrally attached to the underside of the outer cover 10 by welding or other means. A heat insulating material 12, such as a foam resin, for example, is placed inside the inner plug 11. The inside of the inner plug 11 is not limited to the configuration in which the insulation material 12 described above is provided, but may also be configured with air (space) that serves as an insulation layer. Thereby the beverage (liquid) contained in the container body 2 can be kept warm or cold for an extended period of time.

The outer circumference of the peripheral wall 11b (inner plug 11) is provided with male threads 13. On the other hand, female threads 14 are provided above the lip 6 on the inner surface of the mouth neck part 2c (container body 2).

In the capped container 100 of the present embodiment, the cap body 7 (cap unit 1A) can be attached to the container body 2 by rotating the outer lid 10 (cap body 7) clockwise (hereinafter referred to as "closing direction") in the top view from a state in which the inner plug 11 is fitted inside the container body 2 from the upper opening 2d by screwing the male threads 13 with the female threads 14.

On the other hand, in the capped container 100 of the present embodiment, the male threads 13 and female threads 14 can be unscrewed, and the cap body 7 (cap unit 1A) can be removed from the container body 2 from the state in which the cap body 7 (cap unit 1A) is attached to the container body 2 by rotating the outer lid 10 (cap body 7) against the container body 2 toward the left (hereinafter referred to as "opening direction") in the top view.

Furthermore, the male threads 13 and female threads 14 are complementary to each other. When using double start threads, the cap body 7 (cap unit 1A) can be attached to and detached from the container body 2 with a smaller number of rotational operations (approximately 360° in the present embodiment).

A seal packing 15 is detachably attached to the outer circumference of the lower end of the inner plug 11. The seal packing 15 is a ring-shaped sealing member that seals the space between the lip 6 of the container body 2 and the inner plug 11, and is made of a heat-resistant elastic material such as silicone rubber.

The lower end of the inner plug 11 has a ring-shaped groove 11c that is reduced in diameter over the entire circumference from the outer diameter of the peripheral wall 11b, and a ring-shaped flange part 11d that protrudes from the lower end of the groove 11c in an expanding direction over the entire circumference thereof.

On the other hand, the inner surface of the seal packing 15 has a ring-shaped mating protrusion 15a that is fitted into the groove 11c and a ring-shaped mating recess 15b that is fitted into the flange part 11d.

The seal packing 15 is detachably attached to the outer circumference of the lower end of the inner plug 11 by mating the mating protrusion 15a into the groove 11c and mating the flange part 11d with the mating recess 15b.

Two elastic flange parts 15c are provided on the outer circumference of the seal packing 15, protruding in the radial outward direction. When the cap body 7 (cap unit 1A) is attached to the container body 2, the seal packing 15 adheres to the lip 6 of the container body 2 over the entire circumference thereof while the elastic flange part 15c is elastically deformed. This enables sealing (to stop water) between the lip 6 (container body 2) and the inner plug 11 (cap body 7).

On the other hand, the seal packing 15 can be removed from the inner plug 11 (cap body 7) by elastically deforming (stretching) the packing. This allows the cap body 7 and the seal packing 15 to be cleaned separately, and the seal packing 15 and the cap body 7 can be kept sanitary.

The seal packing 15 is not necessarily limited to the shape described above. For example, the number of elastic flange parts 15c is not limited to the two described above, but can be one or more than three.

Moreover, the seal packing 15 is not necessarily limited to the configuration in which the elastic flange part 15c is provided as described above, and the shape and the like thereof can be modified as necessary. For example, the seal packing 15 may be configured with an elastic flange part having a shape that protrudes while curving downward from the upper edge of the outer circumference of the packing.

The seal packing 15 is not limited to a configuration of being detachably attached to the inner plug 11 (cap body 7), but may also be integrally molded with the inner plug 11 (cap body 7). In this case, there is no need to remove the seal packing 15 from the inner plug 11 (cap body 7) and for separate washing.

The handle member 9 is made of a high-strength and lightweight synthetic resin, such as polypropylene (PP), and has an arc-shaped curved arch part 9a between the two ends thereof.

The handle member 9 has a shape that continuously decreases in thickness from both ends toward the middle part of the arch part 9a, with the middle part of the arch part 9a being the thinnest part.
Alternatively, the handle member 9 has a shape where the width of the arch part 9a is constant between the two ends.

The handle member 9 has a smaller thickness in the middle of the arch part 9a than the thicknesses at the two ends, allowing the arch part 9a to more easily deform elastically. Thereby assembly is made easier by elastically deforming the handle member 9 to bend during the assembly process of attaching the handle member 9 to the cap body 7.

The handle member 9 is freely rotatable between a first position above the cap body 7 as depicted in FIG. 3(A) and a second position to the side of the cap body 7 as depicted in FIG. 3(B).

Correspondingly, the cap body 7 has a storage recess 16 for the handle member 9 in the second position. A storage recess 16 is formed along the entire circumference between the peripheral wall 10a and the upper wall 10b of the outer lid 10. In other words, the outer lid 10 has a reduced diameter than the outer circumference of the peripheral wall 10a to form the storage recess 16.

The handle member 9 is rotatably attached at relative positions on the sides where the storage recess 16 of the outer lid 10 (cap body 7) is provided via a pair of hinge parts 8, while connecting between the hinge parts 8 protruding outward.

As a result, the handle member 9 can rotate within an angular range of 180° between a first position (90° to the bottom of the storage recess 16) where the arch part 9a is upright upward from the bottom of the storage recess 16 and a second position (0° or 180° to the bottom of the storage recess 16) where the arch part 9a contacts the bottom of the storage recess 16 in a rotating manner.

In the first position, the handle member 9 has the middle of the arch part 9a located above the cap body 7. On the other hand, the handle member 9 is stored inside the storage recess 16 in the second position, and the outer surface of the arch part 9a is roughly aligned with the outer surface of the peripheral wall 10a (outer lid 10).
This allows for a better appearance (aesthetics) when the handle member 9 is stored in the second position.

A pair of hinge parts 8 freely support both ends of the handle member 9 against the cap body 7. The pair of hinge parts 8 are symmetrically positioned at both ends of the handle member 9 and are mutually congruent.

Specifically, as depicted in FIG. 4 to FIG. 8, each hinge part 8 has a hinge shaft 17 provided on either one of the cap body 7 or handle member 9 (cap body 7 in the present embodiment) and a hinge bearing 18 provided on the other of either the cap body 7 or handle member 9 (handle member 9 in the present embodiment), and a cap member 19 attached to the tip end side of the hinge shaft 17.

As depicted in FIG. 4, the hinge shaft 17 has a cylindrical shaft part 17a protruding outward from the side of the cap body 7 where the storage recess 16 is provided, and a retaining part 17b protruding in a radial direction from both upper and lower sides at the tip end side of the shaft part 17a.

As depicted in FIG. 5 (A) and (B), the hinge bearing 18 has a shaft hole 18a that penetrates the ends of the handle member 9 in the thickness direction, a cutout part 18b that cuts out around the shaft hole 18a in a shape corresponding to the retaining part 17b on a surface (inner surface) opposite the cap body 7 of the handle member 9, a guide recess 18c that is recessed around the shaft hole 18a on a surface (outer surface) opposite to the inner surface of the handle member 9 over an entire circumference corresponding to the outer diameter of the retaining part 17b, and a bottom surface 18d that is flat on the bottom surface of the guide recess 18c.

At each hinge part 8, the shaft part 17a is inserted into the shaft hole 18a from a third position (in the present embodiment, a position where the handle member 9 is at about 15° to the bottom of the storage recess 16) where the retaining part 17b can enter from the cutaway 18b, as depicted in FIG. 6. From this state, by rotating the handle member 9 to a position other than the third position, the retaining part 17b, which is located inside the guide recess 18c, is rotatably guided. As a result, the shaft part 17a is stopped from slipping out of the shaft hole 18a, and the hinge shaft 17 is supported by the hinge bearing 18.

As depicted in FIG. 7(A) and FIG. 7(B), the cap member 19 has a disc-shaped cap body 19a corresponding to the guide recess 18c, a mating protrusion 19b protruding inward from the center of one side of the cap body 19a, and a pair of locking tabs 19c protruding from both sides across the mating protrusion 19b of the cap body 19a, with the tips bent inward.

On the other hand, the hinge shaft 17 has a mating recess 17c with the center of the tip of the shaft part 17a recessed inward, a pair of locking receptacles 17d protruding in the outward radial direction from the sides of the shaft part 17a with a retaining part 17b in between, and an abutting surface 17e facing the bottom surface 18d on the inner side of the retaining part 17b.

As depicted in FIG. 8(A) and FIG. 8(B), the cap member 19, with the hinge shaft 17 supported on the hinge bearing 18, has the cap body part 19a mated inside the guide recess 18c, the mating protrusion 19b is mated into the mating recess 17c, and a pair of locking tabs 19c engage with a pair of locking receptacles 17d.
This prevents the cap member 19 from shifting and keeps it secured to the tip end side of the hinge shaft 17.

In the hinge part 8, a cap member 19 is attached to the tip end side of the hinge shaft 17, making it impossible to pull the retaining part 17b out of the cutaway 18b in the third position, and thus the hinge shaft 17 is maintained in the state of being supported by the hinge bearing 18.

Conventionally, a third position is set where the handle member 9 interferes with the container body 2 and cannot be removed when the cap unit 1A is attached to the container body 2.

In other words, the handle member 9 can be attached to and detached from the cap body 7 before the cap unit 1A is attached to the container body 2, but with the cap unit 1A attached to the container body 2, the handle member 9 cannot be attached to and detached from the cap body 7.

In contrast, the third position is between the first and second positions because the handle member 9 does not interfere with the container body 2 in the present embodiment. Therefore, when the user raises the handle member 9 in the second position (the position where the handle member 9 is at 0° or 180° to the bottom of the storage recess 16), setting is preferably performed set such that when the user puts a finger on the handle member 9, the thickness of the finger exceeds the third position (where the handle member is about 15° to the bottom of the storage recess 16).

In normal use, it is difficult to retain the handle member 9 in the third position, and the structure causes difficulty in pulling out the retaining part 17b from the cutaway 18b.

The cap member 19 hides the hinge part 8 to improve the appearance (aesthetics) and also has an effect of preventing the handle member 9 from coming off, even if the handle member 9 is in the third position.

As depicted in FIG. 8(A) and FIG. 8(B), each hinge part 8 has a detachment prevention mechanism 20 to prevent the handle member 9 and cap member 19 from detaching due to the impact of a fall, such as when the handle member 9 is dropped face down.

The detachment prevention mechanism 20 has a bottom surface 18d, which is a plane at the bottom in the axial direction of the hinge part 8 in the guide recess 18c, and an abutting surface 17e, which is a plane opposite the bottom surface 18d on the inner surface side of the retaining part 17b.

In the detachment prevention mechanism 20, when the handle member 9 is dropped face down, the impact of the drop causes elastic deformation in the direction that causes both ends of the handle member 9 to be pushed outward in the axial direction of the hinge shaft 17 against the cap body 7.

The initial contact between the abutting surface 17e of the hinge shaft 17 and the bottom surface 18d of the hinge bearing 18 prevents the handle member 9 from being pushed outward any further by elastic deformation.

This prevents the handle member 9 from coming off from the cap body 7 or being damaged due to large deformation of the handle member 9, and also prevents the handle member 9 from coming in contact with the cap member 19 causing the cap member 19 to come off.

As depicted in FIG. 4 and FIG. 9(A), (B), each hinge part 8 has a clicking mechanism 21 that provides a clicking sensation at least at a first position (the first position and second position in the present embodiment) and retains the handle member 9 in at least a first position (the first position and second position in the present embodiment).

The clicking mechanism 21 has a plurality (three in the present embodiment) of engagement recesses 22 on one side (hinge bearing 18 in the present embodiment) of the mutually opposed surfaces of the hinge shaft 17 and hinge bearing 18, and an engagement protrusion 23 on the other side (hinge shaft 17 in the present embodiment).

The plurality of engagement recesses 22 are notched around the shaft hole 18a on the inner surface of the handle member 9 in a shape corresponding to the engagement protrusions 23, corresponding to a first position (90° to the bottom of the storage recess 16) and a second position (0° or 180° to the bottom of the storage recess 16).

The engagement protrusions 23 are provided protruding outward from below the shaft part 17a on the side of the cap body 7 where the storage recess 16 is provided.

As depicted in FIG. 9(A), the clicking mechanism 21 can provide a clicking sensation and retain the handle member 9 in the first position by engaging the engagement protrusion 23 with one of the engagement recesses 22 in the first position when the handle member 9 is rotated.

As depicted in FIG. 9(B), the clicking mechanism 21 can provide a clicking sensation and retain the handle member 9 in the second position by engaging the engagement protrusion 23 with one of the engagement recesses 22 in the second position when the handle member 9 is rotated.

In the present embodiment, the first position is set at 90° to the bottom of the storage recess 16, but is not limited to this configuration, and can be set at any angle, for example, at 45° to the bottom of the storage recess 16.

In the present embodiment, there are a plurality of (three) engagement recesses 22 for the first and second positions, but if the clicking mechanism 21 is only in the first position, a single engagement recess 22 can be used.

On the other hand, in the clicking mechanism 21, when the handle member 9 is rotated from a state where the engagement recess 22 is engaged with the engagement protrusion 23 at the first position and second position, the engagement between the engagement recess 22 and engagement protrusion 23 is released by moving the hinge bearing 18 relative to the hinge shaft 17 outside the axial direction of the hinge shaft 17 (hinge part 8).This allows the handle member 9 to be rotated between the first and second positions.

The capped container 100 with the cap unit 1A of the present embodiment having the above configuration can be carried while holding the handle member 9.
Since the clicking mechanism 21 provides a clicking sensation at the first and second positions and can retain the handle member 9 in the first and second positions, the handle member 9 does not hang down from the cap body 7 and does not become an obstacle. This can further improve usability.

In the capped container 100 equipped with the cap unit 1A of the present embodiment, when an impact is applied to the handle member 9 retained in the first position, for example, when the handle member 9 is dropped face down, the arch part 9a in contact with the ground is pressed, and the two ends of the handle member 9 elastically deform in the direction of being pushed outward in the axial direction of the hinge shaft 17 against the cap body 7.

Since the thickness of the handle member 9 is smaller in the middle of the arch part 9a than the thicknesses at the both ends of the handle member 9, the middle part of the handle member 9 can easily be elastically deformed. Therefore, the handle member is easily elastically deformed in the direction of being opened outward in the axial direction of the hinge shaft 17 (hinge part 8).

Here, the first contact between the abutting surface 17e of the hinge shaft 17 and the bottom surface 18d of the hinge bearing 18 by the detachment prevention mechanism 20 prevents the handle member 9 from being pushed outward further by elastic deformation.

This prevents the handle member 9 from coming off from the cap body 7 or being damaged due to large deformation of the handle member 9, and also prevents the handle member 9 from coming in contact with the cap member 19 causing the cap member 19 to coming off.

When an impact is applied to the handle member 9 retained in the first position, such as when the handle member 9 is dropped face down, the arch part 9a in contact with the ground is pressed, and the two ends of the handle member 9 are pushed outward in the axial direction of the hinge shaft 17 against the cap body 7 in the direction of elastic deformation.

At this time, the handle member 9 is released from the retaining state of the handle member 9 by the clicking mechanism 21, and the handle member 9 is stored in the storage recess 16 while collapsing into the second position.
This can prevent damage to the hinge part 8 and handle member 9 while mitigating the impact to the handle member 9 and hinge part 8 by converting the impact to the rotational motion of the handle member 9.

The area around the hinge bearing 18, which is at both ends of the handle member 9, is thicker than the arch part 9a, making the hinge bearing more rigid.
Therefore, even if the handle member 9 is dropped face down, the handle member 9 does not damage easily.

In the present embodiment, the hinge shaft 17 is provided to project outward from the side direction of the cap body 7, and the hinge bearing 18 is provided to penetrate the end of the handle member 9 in the thickness direction.

On the other hand, a selection can be made to choose whether the hinge shaft 17 and hinge bearing 18 should be provided on the cap body 7 or the handle member 9, or whether the hinge shaft 17 should project outward or inward.

However, considering ease of cleaning, ease of molding and assembly during manufacturing, and aesthetic appearance, the most ideal configuration of the present embodiment is to provide the hinge shaft 17 in this form to protrude outward from the side direction of the cap body 7 and the hinge bearing 18 at the end of the handle member 9.

### (Embodiment 2)

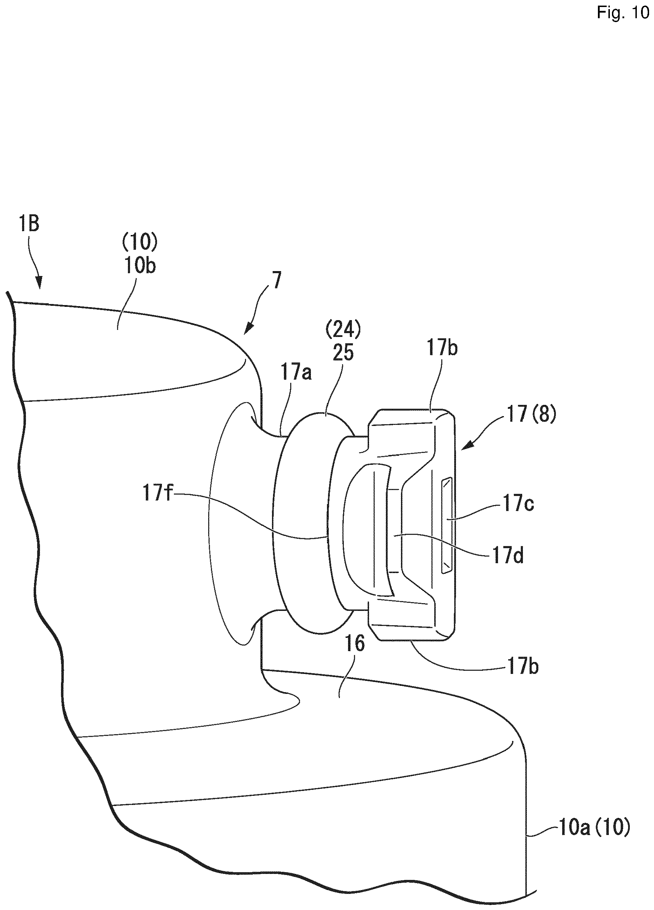

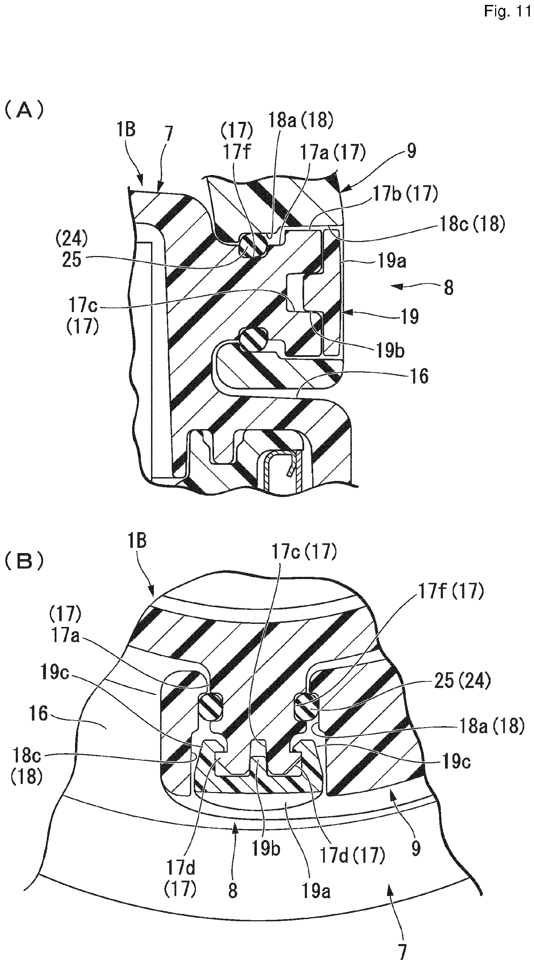

Next, the second Embodiment of the present invention, for example, the cap unit 1B depicted in FIG. 10 and FIG. 11, is described.

FIG. 10 depicts a perspective view of the hinge shaft 17 and sliding member 25 on the cap body 7 side in the hinge part 8 provided in the cap unit 1B.
FIG. 11(A) depicts a vertical cross-sectional view of the hinge part 8 provided by the cap unit 1B.
FIG. 11(B) depicts a horizontal cross-sectional view of the hinge part 8 provided by the cap unit 1B.
In the following description, the same parts equivalent to the above cap unit 1A shall be omitted and the same symbols shall be used in the drawings.

As depicted in FIG. 10 and FIG. 11(A), (B), the cap unit 1B of the present embodiment has a handle retaining mechanism 24 that always retains the handle member 9 between the first and second positions in place of omitting the clicking mechanism 21 in the above hinge part 8. Otherwise, the cap unit 1B has basically the same configuration as the above cap unit 1A.

Specifically, the handle retaining mechanism 24 has a sliding member 25 that is positioned between the mutually opposed surfaces of the hinge shaft 17 and the hinge bearing 18 to provide sliding resistance between the first and second positions.

The sliding member 25 is made of a heat-resistant ring-shaped elastic member, such as silicone rubber, and is mated around the shaft part 17a.
On the other hand, the shaft part 17a is surrounded by a ring-shaped groove 17f into which the sliding member 25 is mated.

In the handle retaining mechanism 24, when the hinge shaft 17 is supported by the hinge bearing 18, the sliding member 25 is squeezed between the shaft part 17a and the shaft hole 18a to provide sliding resistance to the rotation of the handle member 9. This is true not only in the first and second positions of the handle member 9, but also throughout the entire range in which the handle member 9 can rotate.

This sliding resistance prevents the handle member 9 from dropping into the second position due to its own weight, and allows the handle member 9 to always be retained in any position between the first and second positions.

Furthermore, the sliding resistance is set to provide a favorable operating feel when the user rotates the handle member 9. The sliding resistance can be adjusted by the material of the sliding member 25, surface treatment (including coating and the like), degree of elastic deformation (degree of squeezing), and the like.

The capped container 100 with the cap unit 1B of the present embodiment having the above configuration can be carried while holding the handle member 9.
In addition, since the handle retaining mechanism 24 can retain the handle member 9 in a continuous manner between the first and second positions, the handle member 9 does not hang down from the cap body 7 and does not become an obstacle even when the capped container 100 is tipped over, in a so-called inverted state.
This can further improve usability.

In the capped container 100 equipped with the cap unit 1B of the present embodiment, when an impact is applied to the handle member 9 retained in the first position, for example, when the handle member 9 is dropped face down, the arch part 9a in contact with the ground is pressed, causing the handle member 9 to be stored in the storage recess 16 while falling into the second position.
By converting the impact on the handle member 9 and the hinge part 8 into a rotational movement of the handle member 9, damage to the hinge part 8 and the handle member 9 can be prevented.

### (Embodiment 3)

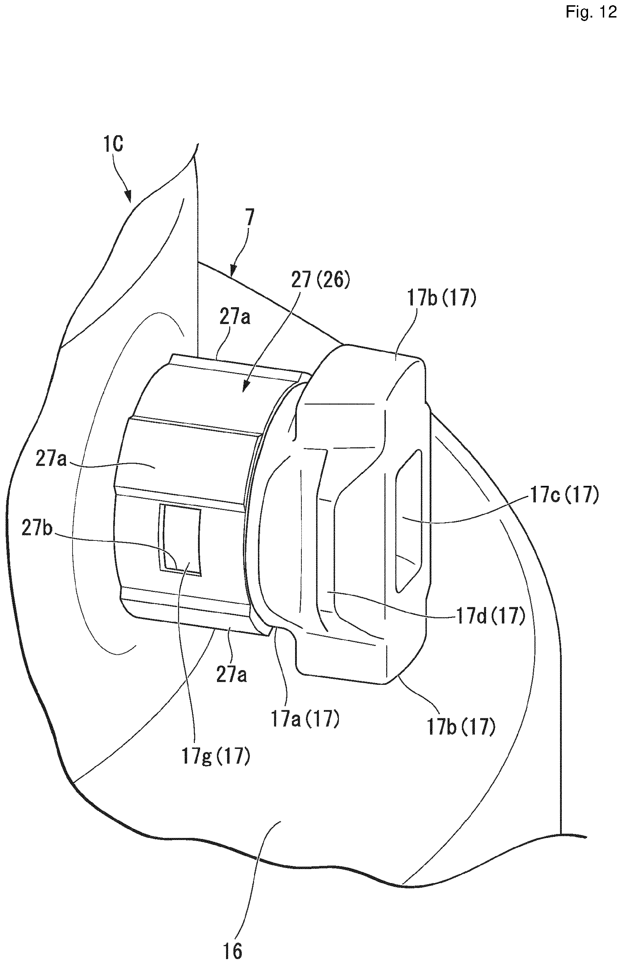

Next, Embodiment 3 of the invention, for example, the cap unit 1C depicted in FIG. 12 to FIG. 14, is described.
FIG. 12 depicts a perspective view of the hinge shaft 17 and sliding member 27 on the cap body 7 side in the hinge part 8 provided in the cap unit 1BC.

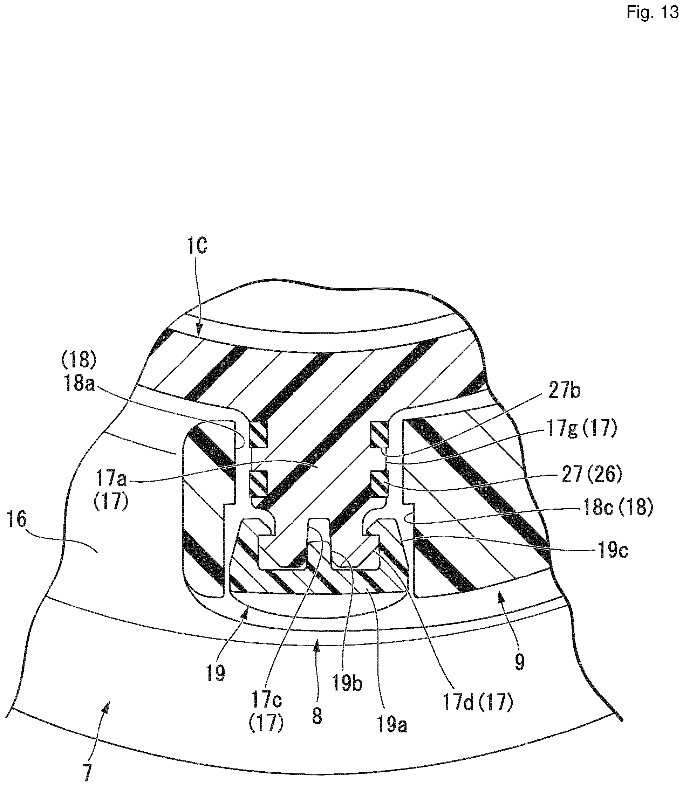

FIG. 13 depicts a horizontal cross-sectional view of the hinge part 8 provided on the cap unit 1C.

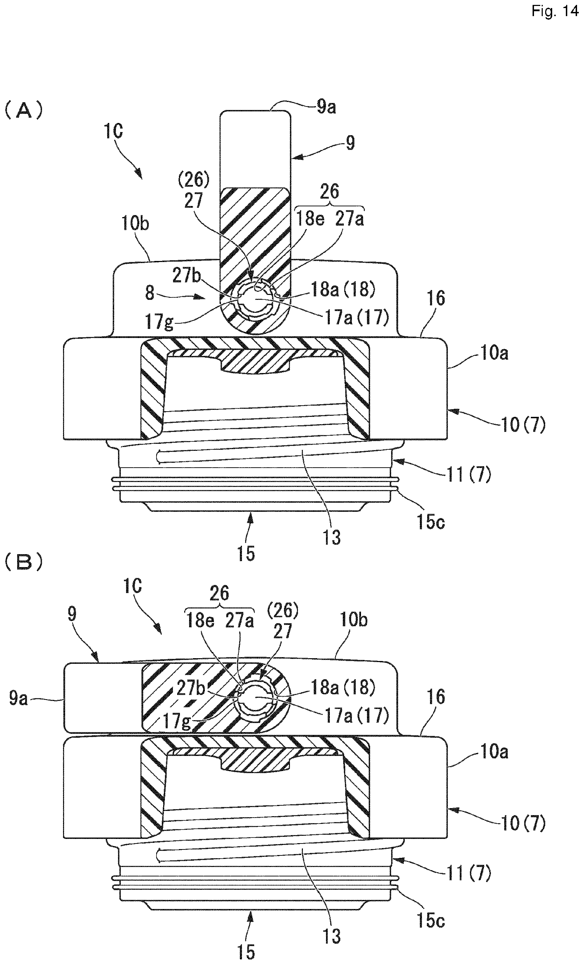

FIG. 14(A) is a cross-sectional view of the hinge part 8 provided on the cap unit 1C, depicting a state in which the handle member 9 is positioned above the cap body 7.
FIG. 14(B) is a cross-sectional view of the hinge part 8 provided on the cap unit 1C, depicting a state in which the handle member 9 is positioned on the side of the cap body 7.
In the following description, the same parts equivalent to the above cap unit 1A shall be omitted and the same symbols shall be used in the drawings.

As depicted in FIG. 12 to FIG. 14, the cap unit 1C of the present embodiment consists of a handle retaining mechanism 26 that retains the handle member 9 in at least a first position (the first position and second position in the present embodiment) instead of omitting the clicking mechanism 21 in the above hinge part 8. Otherwise, the cap unit 1B has basically the same configuration as the above cap unit 1A.

Specifically, the handle retaining mechanism 26 has a sliding member 27 that is positioned between the mutually opposed surfaces of the hinge shaft 17 and the hinge bearing 18 to provide sliding resistance in the first and second positions.

The sliding member 27 is made of a substantially cylindrical elastic member with heat resistance, such as silicone rubber, and is fitted around the shaft part 17a.
The sliding member 27 has a plurality (four in the present embodiment) of sliding protrusions 27a protruding from a part of the outer surface thereof, corresponding to a first position (90° to the bottom of the storage recess 16) and a second position (0° or 180° to the bottom of the storage recess 16).

On the other hand, the hinge bearing 18 has a plurality (two in the present embodiment) of sliding protrusions 18e protruding from a part of the inner surface of the shaft hole 18a, corresponding to a first position (90° to the bottom of the storage recess 16) and a second position (0° or 180° to the bottom of the storage recess 16).

The sliding member 27 has a securing hole 27b for securing to the shaft part 17a. On the other hand, the outer circumference of the shaft part 17a is provided with a securing protrusion 17g that is fitted into the securing hole 27b.

In the handle retaining mechanism 26, when the hinge shaft 17 is supported by the hinge bearing 18, the sliding protrusion 27a on the sliding member 27 side and the sliding protrusion 18e on the hinge bearing 18 side are sliding against each other at the first position depicted in FIG. 14(A) against the rotation of the handle member 9, thereby providing sliding resistance. This allows the handle member 9 to be retained in the first position and also allows the user to recognize the first position by tactile sensation.

In the handle retaining mechanism 26, when the hinge shaft 17 is supported by the hinge bearing 18, the sliding protrusion 27a on the sliding member 27 side and the sliding protrusion 18e on the hinge bearing 18 side are sliding against the rotation of the handle member 9 at the second position depicted in FIG. 14(B), thereby providing sliding resistance. This allows the handle member 9 to be retained in the second position and also allows the user to recognize the second position by tactile sensation.

The sliding resistance between the sliding protrusion 27a and the sliding protrusion 18e is set to provide a good operating feel when the user performs the rotary operation of the handle member 9.The sliding resistance can be adjusted by the material of the sliding member 27, surface treatment (including coating and the like), and the degree of elastic deformation (degree of squeezing) of the sliding protrusion 27a.

On the other hand, in the handle retaining mechanism 26, when the handle member 9 is rotated from the first or second position, the sliding protrusion 27a on the sliding member 27 side and the sliding protrusion 18e on the hinge bearing 18 side are separated to eliminate sliding resistance. This allows the handle member 9 to be rotated between the first and second positions without resistance.

The capped container 100 with the cap unit 1C of the present embodiment having the above configuration can be carried while holding the handle member 9.
Since the handle retaining mechanism 26 can retain the handle member 9 in the first and second positions, the handle member 9 does not hang down from the cap body 7 and does not become an obstacle even when the capped container 100 is turned upside down, in a so-called inverted state. This can further improve usability.

In the capped container 100 equipped with the cap unit 1BC of the present embodiment, when an impact is applied to the handle member 9 retained in the first position, for example, when the handle member 9 is dropped face down, the arch part 9a in contact with the ground is pressed, causing the handle member 9 to be stored in the storage recess 16 while collapsing into the second position. This prevents damage to the hinge part 8 and handle member 9 by converting the impact on the handle member 9 and hinge part 8 into a rotational movement of the handle member 9.

The invention is not necessarily limited to the above embodiments, and various changes can be made without departing from the purpose of the invention.
For example, in the above cap unit 1C, by using a hard resin instead of an elastic member for the sliding member 27 that constitutes the handle retaining mechanism 26 described above, when the handle member 9 is rotated to the first or second position, a clicking sensation can be imparted by the sudden increase in sliding resistance by contacting the sliding protrusion 18e on the sliding member 27 side with the sliding protrusion 1 8e on the hinge bearing 18 side when the handle member is rotated to the first or second position.

In the above embodiment, the case in which the invention is applied to a capped container 100 that has a cold (or heat) retention function by means of a container body 2 having a vacuum insulation structure is depicted as an example applicable to the present invention, but there is not necessarily a limitation to a container with such a container body 2 having a vacuum insulation structure. In other words, the present invention can be widely applied to capped containers in which the cap unit is detachably attached to the container body.

### DESCRIPTION OF CODES

1A to 1C. Cap unit; 2. Container body; 3. Outer container; 4. Inner container; 5.Vacuum insulating layer; 6. Lip; 7. Cap body; 8. Hinge part; 9. Handle member; 10. Outer lid; 11. Inner plug; 12. Insulating material; 13. Male threads; 14. Female threads; 15. Water stop gasket; 16. Storage recess; 17. Hinge shaft; 18. Hinge bearing; 19. Cap member; 20. Detachment prevention mechanism; 21. Clicking mechanism; 22. Engagement recess; 23. Engagement protrusion; 24. Handle retaining mechanism; 25. Sliding member; 26. Handle retaining mechanism; 27. Sliding member; 100. Capped container.

## Claims

1. A cap unit detachably attached to a container body with an opening on an upper part, comprising:
a cap body for closing an upper opening of the container body; and
a handle member with both ends rotatably attached via a pair of hinge parts to the cap body; wherein,
the handle member has an arch part that curves between the two ends and has a shape that decreases in thickness from the two ends toward a middle part of the arch part, and is rotated between a first position positioned above the cap body and a second position positioned on the side of the cap body.

2. The cap unit according to claim 1, wherein
the hinge part has a hinge shaft provided on one of either the cap body or handle member and a hinge bearing provided on the other of either the cap body or handle member, and
the hinge part is provided with a detachment prevention mechanism to suppress the elastic deformation of the handle member when the hinge shaft and hinge bearing abut due to both ends of the handle member elastically deforming in a direction pushing outward of the axial direction of the hinge shaft with respect to the cap body.

3. The cap unit according to claim 2, wherein the hinge part has a hinge shaft provided on the cap body and a hinge bearing provided on the handle member.

4. The cap unit according to claim 1, wherein
the hinge part has a hinge shaft provided on the cap body, a hinge bearing provided on the handle member, and a cap member attached to a tip end side of the hinge shaft penetrating the hinge bearing, and
the hinge shaft is axially supported by the hinge bearing.

5. The cap unit according to claim 1, wherein
the hinge part has a hinge shaft provided on one of either the cap body or handle member, and a hinge bearing provided on the other of either the cap body or handle member;
the hinge shaft is axially supported by the hinge bearing; and
a clicking mechanism is provided on the hinge part to impart a clicking sensation at least at the first position and to retain the handle member in the first position; and the clicking mechanism has an engagement recess provided on one side of mutually opposed surfaces between the hinge bearing and hinge shaft and an engagement protrusion provided on the opposite side, and the engagement recess is engaged with the engagement protrusion at least in the first position in order to impart a clicking sensation and retain the handle member in the first position.

6. The cap unit according to claim 5, wherein
when the handle member is rotated from the state where the engagement recess is engaged with the engagement protrusion at the first position in the clicking mechanism toward a first side or a second side in the rotation direction sandwiching the first position, the hinge bearing is moved relative to the hinge shaft in a direction in which both ends of the handle member are pushed outwardly in the axial direction of the hinge shaft with respect to the cap body, releasing the engaged state between the engagement recess and engagement protrusion.

7. The cap unit according to claim 1, wherein
the hinge part has a hinge shaft provided on one of either the cap body or handle member and a hinge bearing provided on the other of either the cap body or handle member;
the hinge shaft is axially supported by the hinge bearing;
and a handle retaining mechanism is provided on the hinge part to retain the handle member in at least the first position, and
the handle retaining mechanism has a sliding member positioned between the hinge shaft and a mutually opposed surface of the hinge bearing to impart sliding resistance at least at the first position.

8. The cap unit according to claim 7, wherein the handle retaining mechanism retains the handle member in the second position due to sliding resistance by the sliding member at the second position.

9. The cap unit according to claim 7, wherein the handle retaining mechanism retains the handle member variably between the first position and second position due to sliding resistance by the sliding member from the first position to the second position.

10. A capped container, comprising: the cap unit according to any one of claims 1 to 9 and a container body to which the cap unit is attached.
